# EUROPEAN PATENT APPLICATION

(11) **EP 1 139 301 A2**
(43) Date of publication of application: **04.10.2001**
(21) Application number: 01302717.2
(22) Date of filing: 23.03.2001
(51) Int. Cl.: G07C 9/00

(54) **An apparatus for identity verification, a system for identity verification, a card for identity verification and a method for identity verification based on identification by biometrics**

(30) Priority: 24.03.2000 JP 2000085133
(71) Applicant: MATSUSHITA ELECTRIC INDUSTRIAL CO., LTD., Kadoma-shi, Osaka 571-8501 (JP)
(72) Inventor: Tamai, Seiichiro, Osaka-fu 563-0104 (JP)
(74) Representative: Butcher, Ian James

(57) **Abstract**

An identity verification system is used to identify persons with high accuracy, while avoiding direct contact with the device to prevent any negative psychological reaction from a user. The system includes: a camera unit and an image processing unit for obtaining object images of body parts (such as fingerprints and irides) by scanning, without physical contact; an image display unit for displaying layered images of the body part as scanned and a guide showing the body part in an optimal position; a control unit for extracting biometric characteristic data from object images and sending the data to a verification server after encrypting by an encryption unit; and a communications interface unit.

## Description

This application is based on an application No. 2000-085133 filed in Japan, the content of which is hereby incorporated by reference.

### BACKGROUND OF THE INVENTION

### (1) Field of the Invention

This invention relates to an apparatus and method which uses biometrics to verify a person's identity, a system to perform financial, commercial or other transactions using the apparatus, and a system and a portable card for such purposes.

### (2) Description of the Prior Art

For the purposes of electronic commerce, credit card and other transactions, the identity of a person is verified by means such as a password or signature. However, passwords and signatures are easy targets for theft, forgery, impersonation or other fraudulent acts. For this reason, identification of persons by biometric characteristics has come into use as a means to provide a high level of security. A representative application is a verification apparatus which obtains an image of a fingerprint via a biometric sensor, and verifies the identity of a person by comparison with a stored reference image (e.g., Japanese Laid-Open Patent Application No. 2000-30028, "Authenticating Device").

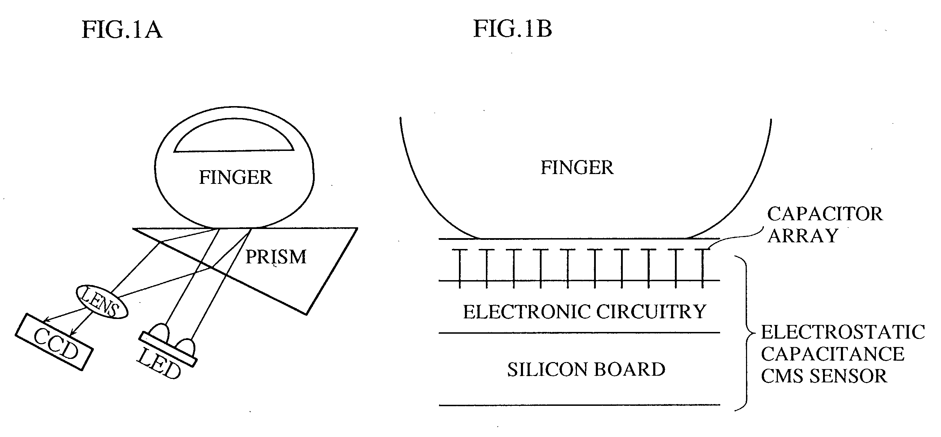

FIG. 1A and FIG. 1B show examples of a biometric sensor utilized by a conventional identity verification device. FIG. 1A is a system called an optical fingerprint scanner, which uses a CCD to scan a finger pressed against a prism or other glass surface, optically capturing an image of the fingerprint. FIG. 1B is a system using a semiconductor sensor chip comprising a capacitor array to measure electrostatic capacitance when a finger is placed on the sensor's surface.

By these methods, obtained fingerprint images are compared to stored reference images, and identity of a person is verified.

However, the conventional identity verification devices using the kinds of biometric sensors described above entail the following problems:
(1) Problems arise from direct contact between the finger and the glass surface. First, as the glass surface becomes soiled by repeated use, periodic cleaning and maintenance will be necessary. Second, durability of the semiconductor sensor is questionable under static electricity buildup, applied finger pressure, and other conditions of actual use. Third, it is necessary to consider the aversion of some users to touching the same glass surface which many others have used.
(2) The necessity of installing a biometric sensor exclusively for reading fingerprints results in a higher cost for the entire apparatus.
(3) There are problems with basing identity verification solely on fingerprints. Identification would be impossible for any user with a bandaged finger, or a burn or abrasion wound which made fingerprint-reading difficult.

### SUMMARY OF THE INVENTION

The first objective of the present invention is to provide a verification apparatus and related devices and systems which will obtain biometric data to verify a person's identity, while addressing these various problems, requiring almost no maintenance to the biometric sensor, avoiding complications caused by static electricity or finger pressure, and without causing any unpleasantness or negative psychological reaction in the user.

The second objective is to provide a verification apparatus and related devices and systems which will verify identity with high reliability and at a low cost.

In order to achieve the first objective, the identity verification devices and systems in the present invention are characterized by the capability to obtain biometric images by scanning parts of the human body without direct physical contact between the device and the subject person. To this end, the device includes a means for displaying the obtained biometric images. The user must only move the specified body part into the proper position for scanning by referring to the displayed image. This allows the capture of clear biometric images by non-contact sensing, while resolving the problems usually associated with sensing by direct contact.

In order to achieve the second objective, the identity verification devices of the present invention can capture multiple biometric images, including fingerprints, patterns of the irides, palm prints, face shape, and others, and combine multiple verification results from these images to verify a person's identity. This increases the reliability of identification, and significantly reduces the cost as compared to using a plurality of sensors to obtain different types of biometric images.

As described above, the present invention provides low-cost non-contact sensing to avoid negative user reaction, while at the same time achieving highly accurate identity verification by using a plurality of biometric images, resulting in an extremely high practical value.

### BRIEF DESCRIPTION OF THE DRAWINGS

These and other objects, advantages and features of the invention will become apparent from the following description thereof taken in conjunction with the accompanying drawings that illustrate specific embodiments of the invention.

### In the drawings:

FIG. 1A depicts a conventional biometric sensor used in an identity verification device, a method known as an optical fingerprint scanner;
FIG. 1B depicts a conventional biometric sensor used in an identity verification device, a method known as an electrostatic capacitance fingerprint sensor chip;
FIG. 2 depicts the overall structure of the electronic money system related to this invention;
FIG. 3 depicts the content of the database used by the verification server in the electronic money system;
FIG. 4A depicts the appearance of the simplest type of ID card (type 1) relating to this invention, one which stores only ID data;
FIG. 4B depicts the appearance of another type of ID card (type 2) relating to this invention, one which also stores characteristic data;
FIG. 4C depicts the appearance of the most advanced type of ID card (type 3) relating to this invention, one which includes a verification circuit;
FIG. 5 is a block diagram depicting the structure of the verification device used in ATMs and other parts of the electronic money system;
FIG. 6 is a block diagram depicting the detailed structure of the verification device's camera unit;
FIG. 7 depicts the fingerprint characteristic data, generated by the image processing unit of the verification device;
FIG. 8 depicts the iris characteristic data, generated by the image processing unit of the verification device;
FIG. 9 is a flowchart depicting the operating procedure used by the verification device in its normal mode to obtain biometric images;
FIG. 10 is a flowchart depicting the operating procedure used by the verification device in its high-accuracy mode to obtain biometric images;
FIG. 11 is a flowchart depicting the overall flow of characteristic data comparison in the verification device;
FIG. 12 is a flowchart depicting the detailed procedure for comparison and verification processing in FIG. 11;
FIG. 13 depicts an operator using a portable telephone equipped with an identity verification device to verify identity;
FIG. 14 depicts an operator using a PDA equipped with an identity verification device to verify identity;
FIG. 15 depicts an operator using an ATM equipped with an identity verification device to verify identity;
FIG. 16 depicts an example of a utility functions menu for the identity verification device;
FIG. 17A depicts an embodiment of the present invention, in which an identity verification device is used in a keyless access control system for an apartment building;
FIG. 17B depicts an embodiment of the present invention, in which an identity verification device is used in a keyless motor vehicle system;
FIG. 18 depicts an embodiment of the present invention, in which an identity verification device is used in an automatic vending machine system.

### DESCRIPTION OF PREFERRED EMBODIMENT

The following describes the preferred embodiment of the present invention, an electronic money system, with reference to the attached figures.

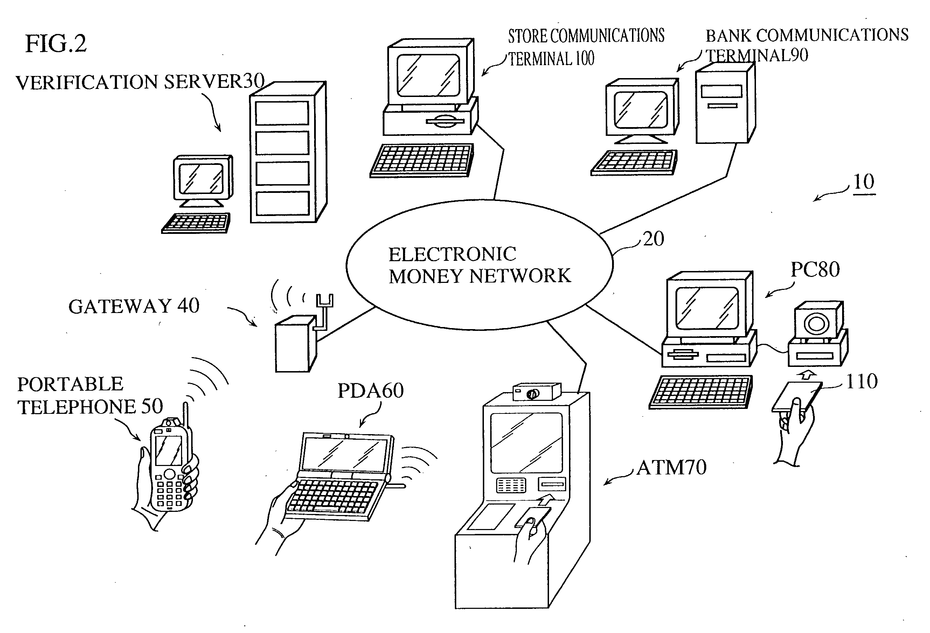

FIG. 2 shows the overall structure of an electronic money system 10 related to the present invention. The electronic money system 10 allows a consumer to process electronic transactions using identity verification based on biometrics, and is composed of a verification server 30, a gateway 40, a portable telephone 50, a PDA (Personal Digital Assistant) 60, an ATM (Automated Teller Machine) 70, a PC (Personal Computer) 80, a bank communications terminal 90 and a store communications terminal 100.

In the electronic money system 10, a biometric image (here, at least one fingerprint or one iris) of the consumer is required for identity verification, and is obtained without direct contact by a camera installed in each communications device 50, 60, 70, 80. An ID card 110, is used to supplement identity verification based on biometric images.

The verification server 30 is a central computer which executes transactions and other processing, by (a) receiving characteristic data (data extracted from a biometric image of a fingerprint or an iris describing its characteristics) sent from the portable telephone 50, PDA 60 and PC 80, (b) verifying identity by comparison with data stored in the reference database, and (c) reporting the results to the relevant store or bank.

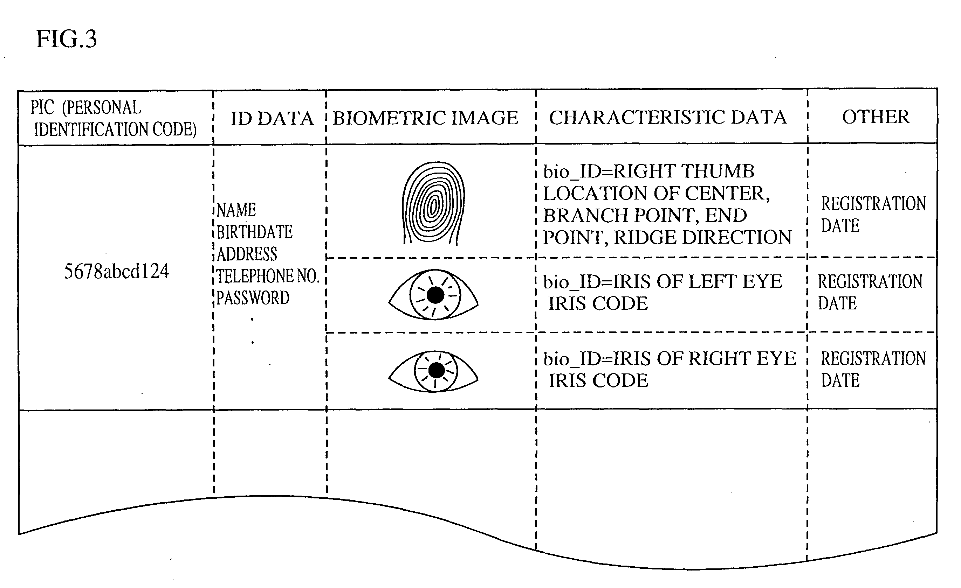

As shown in FIG. 3, the database provided for the verification server 30 contains for each member (consumer) using the electronic money system 10 a PIC (Personal Identification Code), ID data (personal identification information recorded on the ID card 110), biometric images, characteristic data extracted from the biometric images, and the entry date corresponding to each item. In order to maintain high reliability of identity verification in the electronic money system 10, at least two sets of reference data, from biometric images or characteristic data are required.

The verification server 30 also has data distribution functionality, such that when the server receives from the ATM 70 or another device ID data and a request to access characteristic data, the server searches for characteristic data in the database matching the ID data, and, after encryption, sends the characteristic data back to the ATM 70 or other requester.

Further, the verification server 30 has additional functionality, wherein, when identity has been successfully verified and characteristic data for that person has not been updated for a given period of time (such as 3 years), the server can update the database and issue an ID card to a new member of the electronic money system 10, by replacing the old characteristic data with the newer characteristic data sent from a device such as a portable telephone.

The bank communications terminal 90 is a computer set up at a bank, which processes financial transactions such as deposits, withdrawals and wire transfers, based on instructions transmitted from consumers, or devices such as a verification server 30, or an ATM 70.

A store communications terminal 100 is a computer owned by an agent selling products over a network, and processes sales transactions based on instructions received from a consumer, a verification server 30 or others.

A gateway 40 is a wireless base station which connects to a wireless network of portable telephones 50 and PDAs 60 and a communications network 20.

The portable telephone 50 and PDA 60, in addition to the functions of a conventional telephone and digital assistant, by obtaining a biometric image of the operator with an internal camera, extracting characteristic data, and sending it to the verification server 30, gain additional functionality of a mobile terminal capable of making electronic transactions. The operator can order desired products and perform other electronic commerce transactions simply by interacting with the display screen of the portable telephone 50 and PDA 60, without using a card or entering a password.

The ATM 70, in addition to the functions of a conventional ATM, has the additional functionality of processing deposit and withdrawal transactions based on the results of identity verification, by obtaining a biometric image of the operator with an internal camera, verifying identity from the obtained image or the obtained image and ID data read from the ID card 110, in communication with the verification server 30, or without communication with the server (as stand alone).

The operator can perform operations such as withdrawing money from his account by inserting his ID card 110 into an ATM 70 and completing identity verification when he is carrying his card, or simply by completing identity verification when he is not carrying his card, all without entering any type of password.

PC 80 is a computer set up in an office or a home, which, in addition to the functions of a conventional computer, also has the functionality of the PDA 60 above, and the capability of updating the characteristic data stored in an ID card 110. By interacting with the PC 80 display screen, an operator can make purchases, perform maintenance such as rewriting contents of the ID card 110, and other operations.

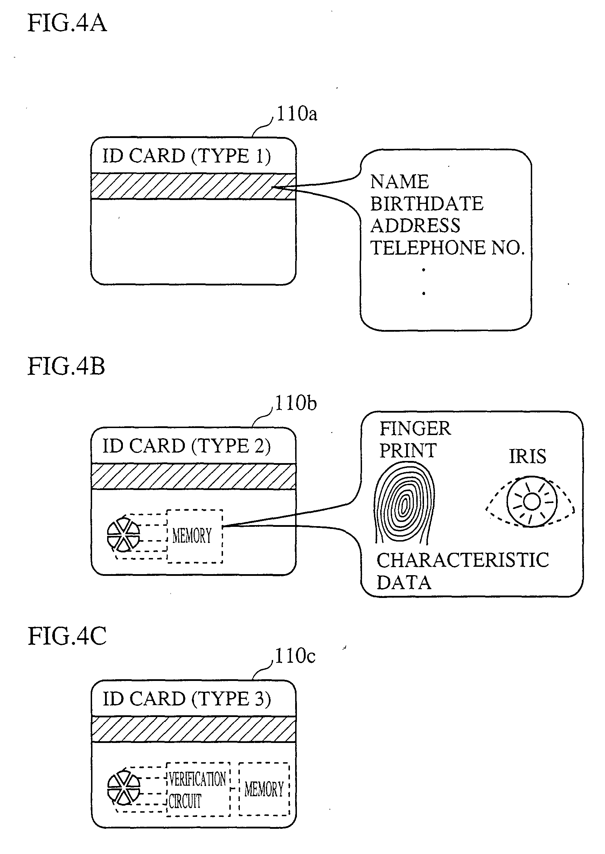

FIG. 4 describes three different types of ID cards 110 used in the electronic money system 10, specifically 110a, 110b and 110c.

ID card 110a shown in FIG. 4A is type 1, the simplest ID card, which is a plastic card including a magnetic stripe or optical memory on its surface. The owner's ID data (name, birth date, address, telephone number, and password) are stored in the magnetic stripe or optical memory. These data are used as keys when searching the verification server 30 for reference data in order to, for example, verify identification at an ATM 70.

In addition to the magnetic or optical memory included in ID card 110a, ID card 110b, shown in FIG. 4B, also includes internal non-volatile IC memory (flash memory) , with an exposed electrode on its surface. The owner's characteristic data is stored in this IC memory. This characteristic data is used, for example, to verify identity at an ATM 70, to confirm that the user and the owner of the ID card 110b are the same person. This confirmation is accomplished by comparison of the user's characteristic data obtained from the ATM camera with the owner's characteristic data stored in the ID card 110b.

In addition to the magnetic or optical memory ID and IC memory included in ID card 110b, the most advanced ID card, 110c, shown in FIG. 4C, also includes its own internal circuit for verifying identity. This ID card 110c has a ROM storing a program and a CPU to execute the program for verification processing, and autonomously judges the similarity of characteristic data obtained from the ATM or PC camera with the characteristic data stored in the IC memory. Use of this ID card 110c eliminates the need for identity verification processing by the verification server 30 and ATM 70.

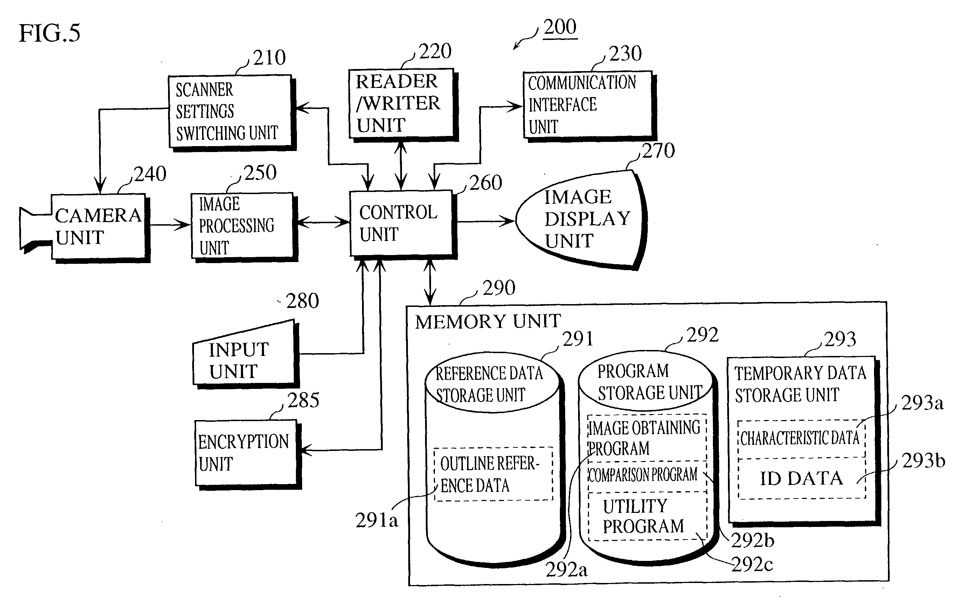

FIG. 5 is a block diagram showing the verification device 200 of the ATM 70 in FIG. 2, that is the part which relates to identity verification in the present invention. The portable telephone 50, PDA 60, PC 80 and verification server 30 each also includes an internal device with the same structure as this verification device 200, or a subset thereof.

The verification device 200 is a device for executing identity verification, which, in interaction with the operator, obtains a biometric image without direct contact, extracts characteristic data from the image, and makes a comparison with the characteristic data stored in the verification server 30 or ID card 110, and is comprised of a scanner settings switching unit 210, a reader/writer unit 220, a communications interface 230, a camera unit 240, an image processing unit 250, a control unit 260, an image display unit 270, an input unit 280, an encryption unit 285 and a memory unit 290.

The camera unit 240 is a small video camera, or the like, which scans the body part to be used in identity verification (here fingerprint or iris) and outputs color image signal.

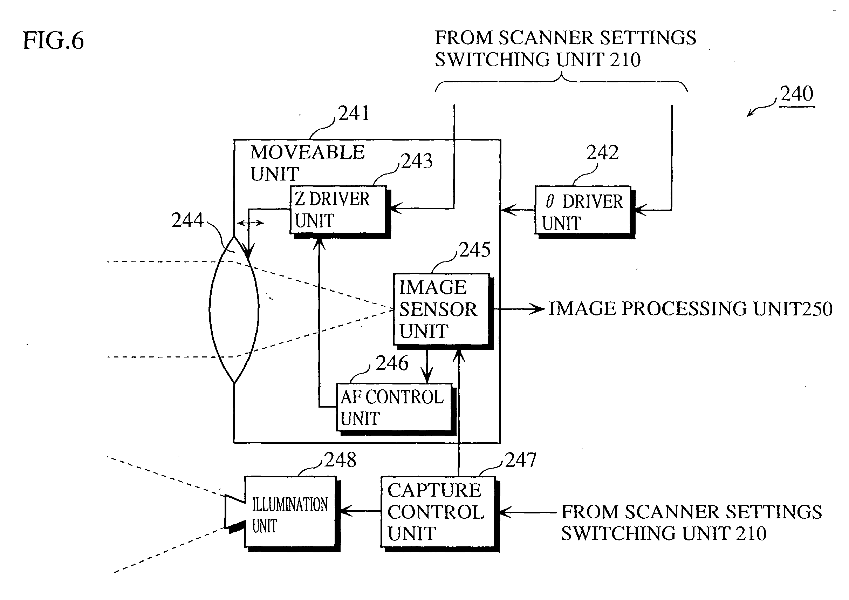

FIG. 6 is a block diagram showing the detailed structure of the camera unit 240. The camera unit 240 is comprised of a Z driver unit 243, scan lens 244, mobile unit 241 which is a mobile assembly including image sensor unit 245 and AF control unit 246, θ driver unit 242, capture control unit 247 and illumination unit 248.

Scan lens 244 is a wide angle zoom lens.

Z driver unit 243 is an actuator which drives the scan lens 244 in the Z (longitudinal) direction, which (1) changes the scanning magnification by zooming the scan lens 240, based on instructions from the scanner settings switching unit 210, and (2) focuses by fine adjustment of the scan lens 244 in the Z direction, based on instructions from the AF control unit 246.

The AF control unit 246 is an automatic focus adjustment circuit, which measures distance to the object by detecting with the image sensor unit 245 reflection of light emitted from the illumination unit 248, and controls the Z driver unit 243 in accordance with the measured distance.

Image sensor unit 245 is a scanning element comprising, for example, a 350 by 400 pixel CMOS image sensor. A CMOS image sensor is easily incorporated into a CPU or other circuit, and consumes little electricity, and is therefore desirable as an element of the image sensor unit 245.

The θ driver unit 242 is an actuator, which uses a gyro or other mechanism to rotate the mobile unit 241 in two dimensions, based on instructions from the scanner settings switching unit 210.

Illumination unit 248 is an LED or flash circuit, which emits light for automatic focus adjustment and strobe.

Capture control unit 247 instructs the image sensor unit 245 to sample (hold) an image, instructs the illumination unit 248 to strobe, based on instructions from the scanner settings switching unit 210. When the illumination unit 248 is instructed to strobe, the capture control unit 247 instructs the image sensor unit 245 to sample images synchronously with the strobe (when the object pupil has contracted).

The scanner settings switching unit 210 receives instructions regarding scanner settings (one of a plurality of stepped scanning magnification settings and one of a plurality of scanning directions) or fine adjustment, and sends control signals corresponding to those conditions or instructions to the Z control unit 243 and θ driver unit 242 of the camera unit 240, thereby roughly adjusting the scan direction or finely adjusting the scan magnification of the camera unit 240. This procedure provides object (part of the operator's body) following control by the camera unit 240, and formation of biometric images on the image sensor 245 in the specified position in the proper size.

When it receives instructions from the control unit 260 to scan an iris, the scanner settings switching unit 210 instructs the capture control unit 247 to scan synchronously with the strobe (hereinafter "strobe-synchronized scan"), as described above. This allows scanning of the iris with the pupil contracted, of a large area of the iris, and confirmation of life in the body, even in low ambient light conditions.

Further, the verification device included in portable telephone 50 and PDA 60, unlike verification device 200 included in ATM 70, does not possess a Z control unit 243 and scanner settings switching unit 210 in the camera unit 240, scanning objects in a fixed scanning magnification and scanning direction (however, automatic focus adjustment by the AF control unit 246 and strobe-synchronized scan by the capture control unit 247 are provided).

In other words, the verification device in the portable telephone 50 and PDA 60 assumes that the object is placed in a specified spatial location. However, in order to guide the object to the specified spatial location, a guide image (showing proper position of the object) is displayed on the image display unit 270.

The image processing unit 250 is comprised of an AD converter, buffer memory, digital filters (smoothing, edge detection, characteristic extraction filters), and a functional unit, and digitizes color image signals from the image sensor unit 245 of the camera unit 240, based on instructions from control unit 260, and extracts the outline and characteristics of the object by filtering and other processing performed on the obtained biometric image data.

The image processing unit 250, in response to a request from the control unit 260, generates (i) all color images scanned by the camera unit 240 (all biometric images), (ii) outline data showing position of an finger or an eye, (iii) the part of the image enclosed by the outline (cut out biometric images) , and (iv) data for recognizing characteristic points of a fingerprint (fingerprint characteristic data) or an iris code describing characteristics of an iris (iris characteristic data), and sends these to the control unit 260.

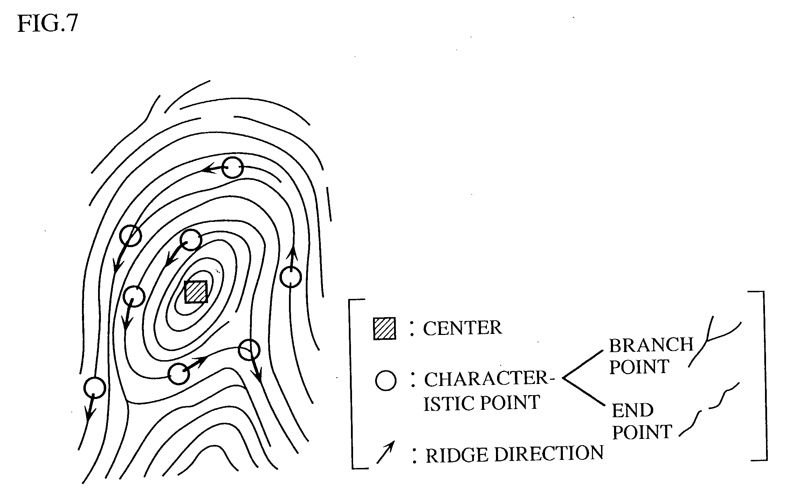

FIG. 7 describes the fingerprint characteristic data generated by the image processing unit 250. Characteristic data are numerical expressions of the relative locations of characteristic points (branch points and end points) or the center, or location and direction of ridges of a fingerprint.

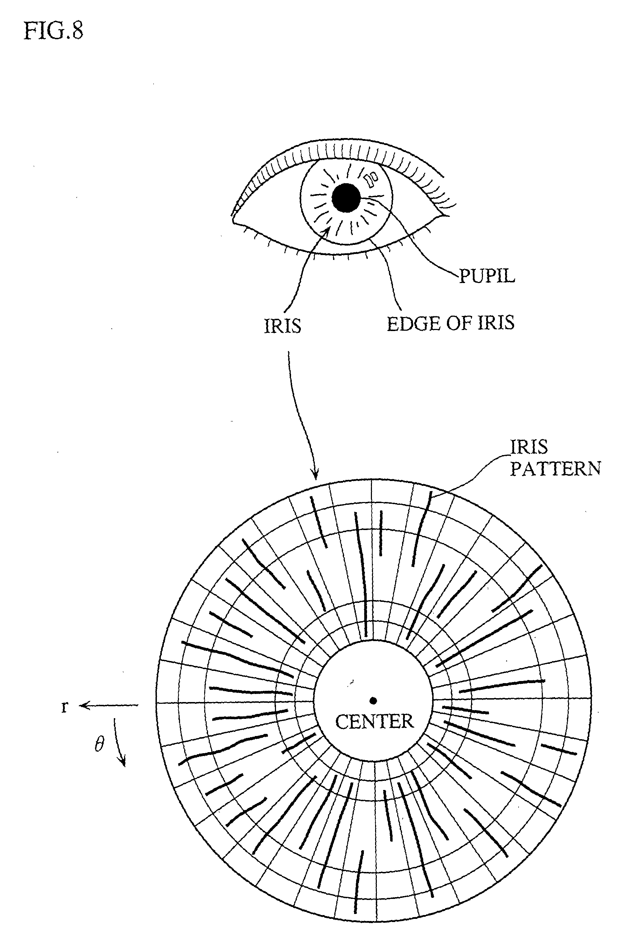

FIG. 8 describes the iris characteristic data generated by the image processing unit 250. The iris is the donut-shaped surrounding the pupil, and is comprised of muscles which control the dilation and contraction of the pupil. Iris characteristic data includes coded binary data describing the tint of the iris pattern (radially-oriented pattern of the iris) in each of a plurality of predetermined areas specified by the polar coordinates of their radial direction and rotational direction.

The reader/writer unit 220 is a recording and reproduction device for the three types of ID cards 110a to 110c, which reads ID data and characteristic data from and writes characteristic data to the ID card 110.

The communications interface unit 230 comprises a circuit which communicates with a modem card, LAN card or wireless device, and serves as the interface circuit for transmissions between the verification device 200 and the verification server 30, via a gateway 40, network 20 or other route.

The image display unit 270 is a color LCD used in a portable telephone 50, a color CRT used in an ATM 70, or other similar device, and is used by the verification device 200 to guide the user's finger or eye to the specified location for scanning.

The input unit 280 is a key pad used in portable telephone 50, a touch panel used in an ATM 70, or similar device, and is used by the verification device 200 to interact with the user, and to obtain ID data to supplement identity verification by biometrics.

The encryption unit 285 is a circuit which, when the verification device 200 sends data relating to identity verification (such as biometric images, characteristic data, or ID data) via the communications interface unit 230 to an external device (such as the verification server 30), allows devices to conduct mutual authorization by challenge-response and share a periodically updated secret key, by which the devices can encrypt and decrypt exchanged data.

The memory unit 290 is composed of (i) reference data storage unit 291, which includes nonvolatile IC memory, (ii) program storage unit 292, and (iii) temporary data storage unit 293, which includes volatile IC memory.

The reference data storage unit 291 stores outline reference data 291a, which describes the outline (shape) of a typical human finger (left and right thumbs and index fingers) and eye (left and right). This outline reference data 291a is used by the verification device 200 to recognize the position of the object finger or eye for identity verification.

The program storage unit 292 stores (i) image obtaining program 292a, which describes a control procedure for obtaining clear biometric images, (ii) comparison program 292b, which describes a procedure for comparing obtained characteristic data with reference characteristic data stored in the verification server 30 or ID card 110, and (iii) utility program 292c, which describes procedures for other supplemental processes (such as registration, comparison test, and scanner settings).

The temporary data storage unit 293 is an operational area for temporarily storing such as characteristic data 293a or ID data 293b which will be subject to comparison.

The control unit 260 is composed of a component such as a CPU, RAM or calendar timer circuit used in a portable telephone 50, ATM 70 or other device. When the control unit 260 receives instructions from the verification server 30 that an operator needs identity verification for an electronic transaction, or receives instructions from an operator, the control unit 260 executes the corresponding program 292a to 292c, which is stored in the program storage unit 292. By this process, the verification device 200 provides the following functionality for the devices 50, 60, 70 and 80:
(1) obtain biometric images
   specifically, (i) obtain biometric images using a guide image (as in portable telephone 50 and PDA 60), and (ii) obtain biometric images using following control (as in ATM 70 and PC 80);
(2) verify identity by comparison
   specifically, (i) verification relying on verification server 30 (as in portable telephone 50, PDA 60, ATM 70 and PC 80), (ii) verification relying on ID card 110 (as in ATM 70 and PC 80), and (iii) verification executed on its own (as in ATM 70);
(3) utility processing
   specifically, (i) storing of characteristic data to verification server 30 or ID card 110 (as in ATM 70 and PC 80), (ii) comparison testing of stored characteristic data (for any of the devices 50, 60, 70 and 80), and (iii) scanner settings (for any of the devices 50, 60, 70 and 80);

The following explains the operations of the electronic money system 10 described above, centered on the operation of the verification device 200.

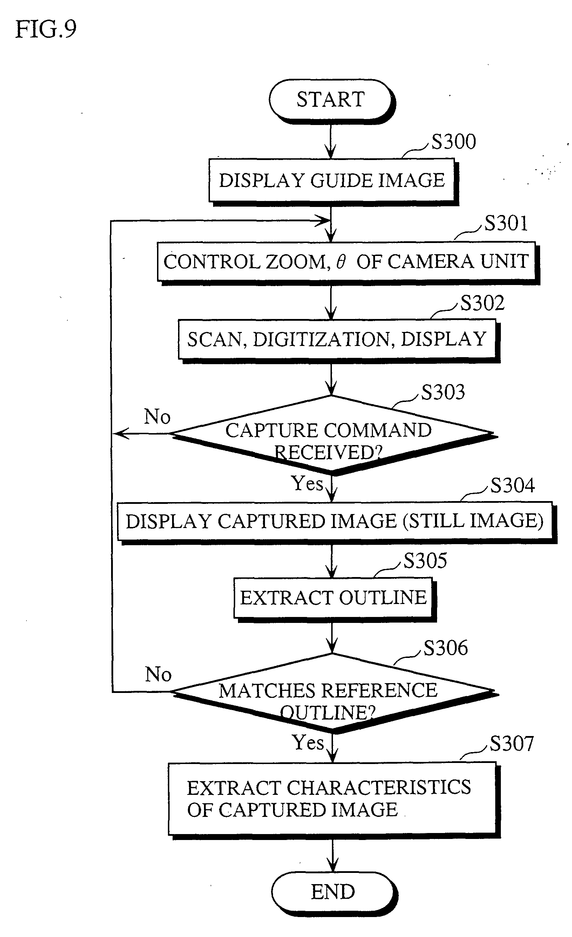

FIG. 9 is a flowchart showing the procedure for obtaining a biometric image by the verification device 200 in its normal mode. The type of biometric image (such as fingerprint image only, iris image only, combination of fingerprint image and iris image) used in identity verification is predetermined by a notice from the verification server 30 to the verification device 200, and stored in the internal memory of the control unit 260.

First, the control unit 260 specifies the body part (e.g.: right thumb) to be used in identity verification, based on instructions from the operator. The control unit 260 then reads outline data 291a for the body part from the reference data storage unit 291, and displays the outline as a red line drawing (guide image) on the image display unit 270 (step S300).

Next, the control unit 260 repeats (i) object following control by adjustment of magnification and direction of the camera unit 240 (step S301), and (ii) biometric image obtaining by the image processing unit 250 and display on the image display unit 270 (step S302), until a capture instruction is given by the operator or a given amount of time has elapsed (step S303).

Specifically, the control unit 260 sends to the scanner settings switching unit 210 preset scanner settings corresponding to the type of body part, operating the Z driver unit 243, θ driver unit 242 and capture control unit 247 of the camera unit 240. The control unit 260 then obtains the biometric images digitized by the image processing unit 250, and displays the images in color on the image display unit 270. Also, depending on the body part to be used for identity verification, the operator is notified of the proper position for scanning. For example, a finger should be placed five centimeters from the scanning lens 244 of the camera unit 240, and 30 centimeters in the case of an eye.

By referring to the moving image and guide image display, an operator can move his finger or portable telephone 50, for example, to align the image of his finger with the guide outline displayed on the image display unit 270. Then, when the images are aligned properly, the operator can initiate capture of the object image by a means such as a button on the input unit 280.

When a capture instruction is given by the operator, or a given amount of time has elapsed ("Yes" at step S303), the control unit 260 interrupts the update display (steps S301 to S303), outputs the last obtained biometric image to the image display unit 270 as a still image (step S304), and judges whether this biometric image was scanned in proper position (step S305 to S306).

Specifically, the control unit 260 gives instructions to the image processing unit 250 to extract the outline of the right thumb from the last obtained biometric image (step S305), calculate the agreement (correlation) with the outline reference data 291a, and determine if the agreement meets a given standard (step S 306). For example, from edge detection and digitization, the pixel block of the outline portion is represented by an outline data value of "1," and, by exclusive disjunction of the pixel values of two pieces of outline data from the same location, the number of pixels whose result is "1" (having an identical pixel value) is defined as the level of agreement, and compared to a set standard value.

When the result of the above comparison does not meet the standard for agreement ("No" at step S306), the control unit 260 calculates the scale (scan magnification) deviation and direction (scan direction) deviation for each of the two outlines, and gives instructions to the scanner settings switching unit 210 based on these calculations, to repeat the outline agreement judgement (steps S301 to S306).

When the result of the comparison does meet the standard for agreement ("Yes" at step S306), the control unit 260 gives instructions to the image processing unit 250 to trim the biometric image, extract fingerprint characteristic data, obtain the results (a trimmed biometric image and characteristic data), and store them in the temporary data storage unit 293 (step S307).

In this way, the verification device 200 uses the guide display to direct the operator's body part into the proper position, and, without direct contact, obtain biometric images, in the desired size and definition, and characteristic data.

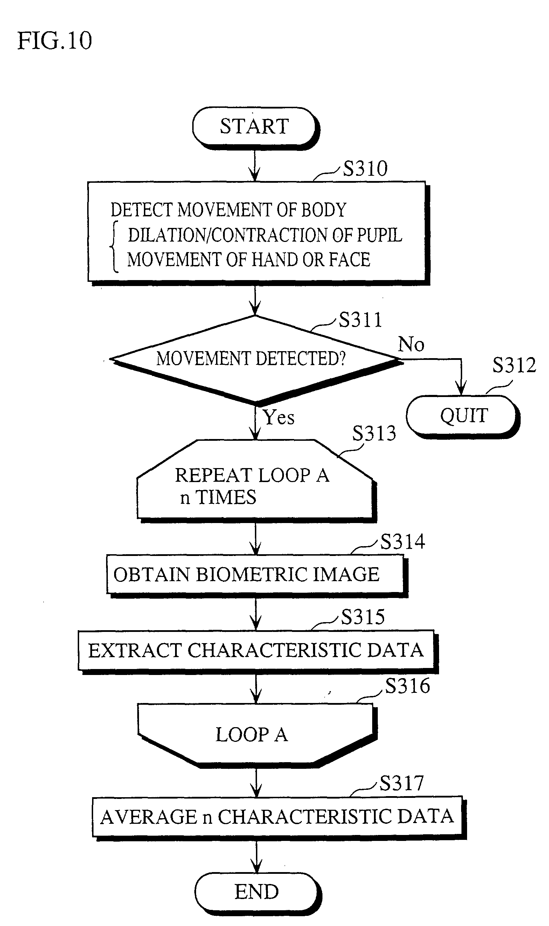

FIG. 10 is a flowchart showing the procedure for obtaining a biometric image by the verification device 200 in high-accuracy mode. Here, high-accuracy mode is defined as the optional operational mode for obtaining highly accurate biometric images (and characteristic data), involving repetition of the procedure shown in FIG. 9, and is specified in advance by the operator via the input unit 280.

In this mode, the verification device 200, prior to obtaining biometric images (step S313 to S316), confirms that the object is a living body (step S310 to S 312). This is to prevent fraudulent acts such as scanning fingerprints of a dead body or using contact lenses to imitate another person's iris pattern.

Specifically, by giving instructions to the scanner settings switching unit 210 the control unit 260:
(1) detects dilation and contraction of the pupil by obtaining images of the iris by strobe-synchronized scan and normal scan, and (2) detects movement of the body by repeatedly scanning the hand or face at given intervals and comparing the outlines extracted from the obtained images (step S310). When movement is not detected ("No" at step S311), further processing is halted (step S312).

When movement is detected ("Yes" at step S311), the process of obtaining biometric images and extracting characteristic data is repeated n (a predetermined number) times (step S313 to S316). Specifically, the control unit 260 repeats the procedure shown in FIG. 9. When movement of the hand or face is detected in the above procedure ("Yes" at step S311), the control unit 260 determines the location of a localized area of the hand or face, and controls the Z driver unit 243 and θ driver unit 242 of the camera unit 240 in order to fix the focal point on that area.

By this method, n sets of characteristic data are obtained, and the control unit 260 generates final characteristic data by averaging the sets together (step S317). Specifically, the positional coordinates describing the same fingerprint characteristic point are averaged, and the iris pattern tint values are totaled and digitized to create an iris code.

In this way, biometric images acquired in the high-accuracy mode are averaged over time, and consequently the scanning time required is longer than in the normal mode shown in FIG. 9. However, the high-accuracy mode allows confirmation that the object is a live body, thereby providing a higher level of security.

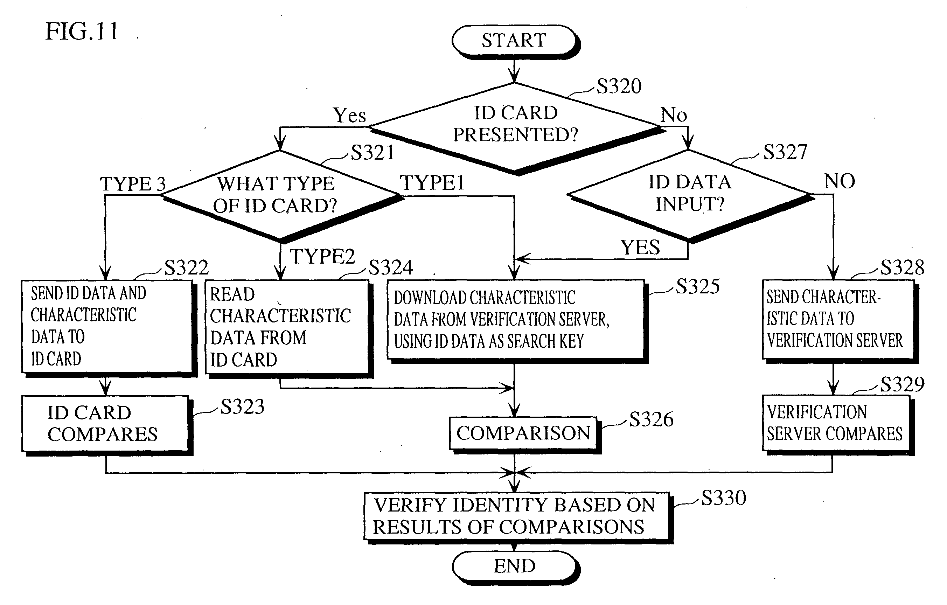

FIG. 11 is a flowchart showing the overall process of characteristic data comparison by the verification device 200. This drawing shows the operational procedure followed by the verification device 200 after the operator's characteristic data (and ID data) are obtained by the procedures shown in FIG. 9 and FIG. 10.

First, based on a signal from the reader/writer unit 220, the control unit 260 detects whether an ID card 110 is provided (step S320), and, when it is provided, detects the type (type 1, 2 or 3) of the ID card 110 (step S321).

Consequently, when a type 1 ID card 110a is provided ("Type 1" at step S321), the control unit 260 retrieves the operator's ID data 293b, stored in the temporary data storage unit 293, and, after encryption at the encryption unit 285, sends the ID data via the communications interface unit 230 to the verification server 30 (step S325). At the same time, the control unit 260 instructs the verification server 30 to return all characteristic data which matches the content of the sent ID.

Upon receiving the one or more sets of characteristic data from the verification server 30, for each set the control unit 260 calculates by successive approximation the agreement with the characteristic data already obtained from the operator (step S326). When the agreement of one or more sets of characteristic data is greater than the given threshold value, the operator's identity is verified, and not verified if none exceeds the threshold value (step S330).

When a type 2 ID card 110b is provided ("Type 2" at step S321), the control unit 260 retrieves the characteristic data from the ID card 110b via the reader/writer unit 220 (step S324), and, with that characteristic data as the reference, performs comparison (step S326) and verification (step S330) as described above.

When a type 3 ID card 110c is provided ("Type 3" at step S321), the control unit 260 retrieves the operator's characteristic data 293a stored in the temporary data storage unit 293, and sends instructions via the reader/writer unit 220 (step S3322) directing the ID card 110c to execute comparison with the stored characteristic data (step S323). The control unit 260 receives results of the comparison (agreement value) from the ID card 110c, and performs verification based on them (step S330).

When no ID card 110 is provided ("No" at step S320), the control unit 260 displays a message on the image display unit 270 requesting the operator to input ID data via the input unit 280, then judges whether such data was entered (step S327).

The control unit 260 handles manually inputs ID data from the operator ("Yes" at step S327) in the same fashion as ID data read from a type 1 ID card 110a (step S325 to S330).

When the operator fails to input ID data ("No" at step S327), the control unit 260 retrieves the operator's characteristic data 293a from the temporary data storage unit, and sends the data along with instructions to the verification server 30 (step S328), directing the server to execute a comparison with characteristic data only (step S329). The control unit 260 receives results of the comparison (agreement value) from the verification server 30, and performs verification based on them (step S330).

In this way, the verification device 200 verifies identity based on characteristic data, but also uses ID data when possible, as supplementary information (for faster searching). Further, in response to the environment, comparison processing is executed by the verification server 30, the verification device 200, or the ID card 110, allowing distribution of the processing load associated with identity verification.

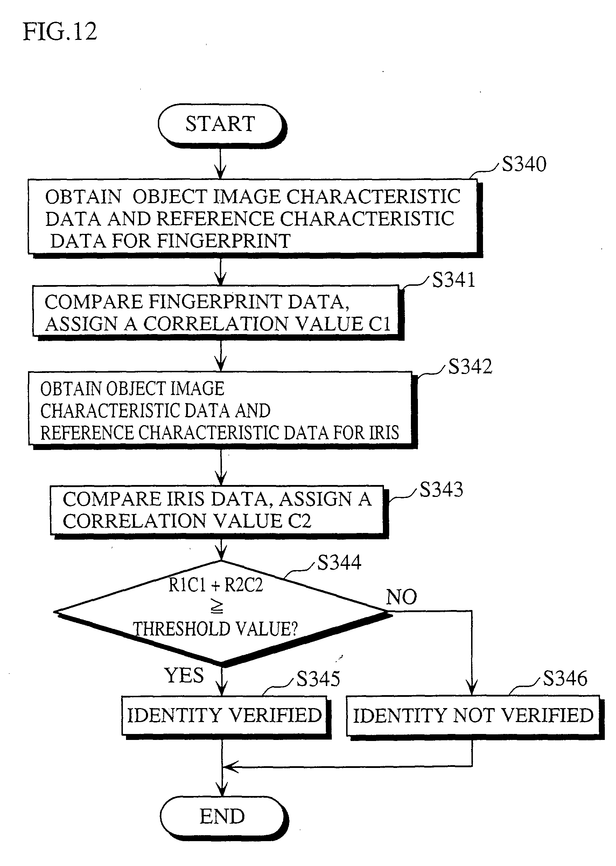

FIG. 12 is a flowchart describing the details of the comparison (steps S323, S326, S329) and verification (step S330) procedures shown in FIG. 11, specifically, the control unit 260 of verification device 200, the verification circuit of the type 3 ID card 110c, and the comparison and verification processing executed by the verification server 30. The following is an explanation of how the control unit 260 of verification device 200 executes comparison and verification of a combination of a fingerprint and an iris.

The control unit 260, by controlling the camera unit 240 and other components, following the procedure shown in FIG. 9, obtains characteristic data of the operator's fingerprint, obtains fingerprint characteristic data as the reference from the verification server 30 via the communications interface unit 230, and deposits the data in the temporary data storage unit 293 (step S340). Then the control unit 260 compares the two sets of fingerprint characteristic data to each other, calculates the agreement value C1 (step S341). For example, from among a plurality of fingerprint characteristic points contained in both sets of characteristic data, the proportion of points whose relative locations match within a certain range may be calculated and used as the agreement value C1.

In similar fashion, the control unit 260 obtains iris characteristic data from the operator and reference characteristic data, deposits both in the temporary data storage unit 293 (step S342), then compares the two sets of characteristic data and calculates the agreement value C1 (step S343). For example, the control unit 260 can compare the iris code included in each set of characteristic data, determine the Hamming distance, and use it as the agreement value C2.

The control unit 260 determines an overall evaluation value by applying preset weighting coefficients R1 and R2 to the obtained agreement values C1 and C2, then judges whether the results exceed a given threshold value (step S344). If the result exceeds the threshold ("Yes" at step S344), identity verification is confirmed (step S345), and if not ("No" at step S344), identity verification is denied (step S346).

As described above, the verification device 200 provides highly accurate identity verification, by using comparisons of a plurality of different body parts. Further, depending on the particular body part, by applying a weighting factor, it is possible to provide a flexible identity verification system, which includes the capability of making fine adjustments to its own judgement criteria based on past verification history.

In addition, when there is a plurality of reference characteristic data, the above process of comparison and verification is repeated, and if identification is positive by one or more sets of characteristic data, identity verification is finally confirmed, while if identification by all sets of characteristic data is negative, identity verification is finally denied.

The following is an explanation of how an operator uses each device included in the verification device 200 described above.

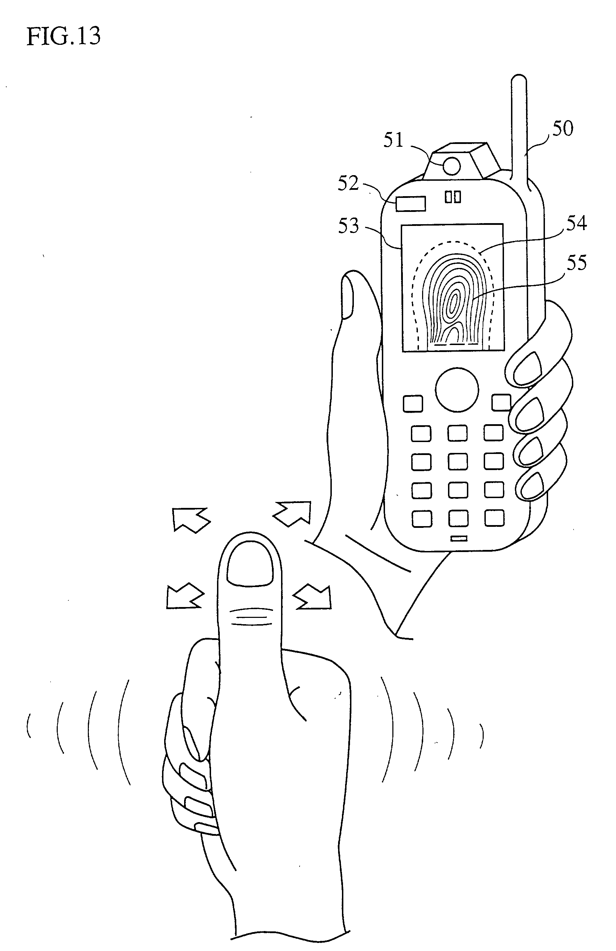

FIG. 13 shows an operator presenting the fingerprint of his right thumb for identity verification by a portable telephone 50. The portable telephone 50 has a lens window 51 and an illumination window 52 for scanning biometric images installed above an LCD 53. The lens window 51, illumination window 52, and LCD 53 correspond to, respectively, the scanning lens 244, illumination unit 248, and image display unit 270 of the camera unit 240 in the verification device 200.

On LCD 53 are displayed a guide image 54 and a fingerprint image of the operator's thumb 55. The operator moves his thumb and the portable telephone 50 to match the outline of the fingerprint image 55 to the fixed guide image 54. By holding the portable telephone 50 and thumb in the proper position for a given period of time (e.g., 1 second), or by pressing a specified key, the verification device 200 is instructed to capture the fingerprint image. When captured, the image is frozen on the LCD 53 while comparison processing is executed.

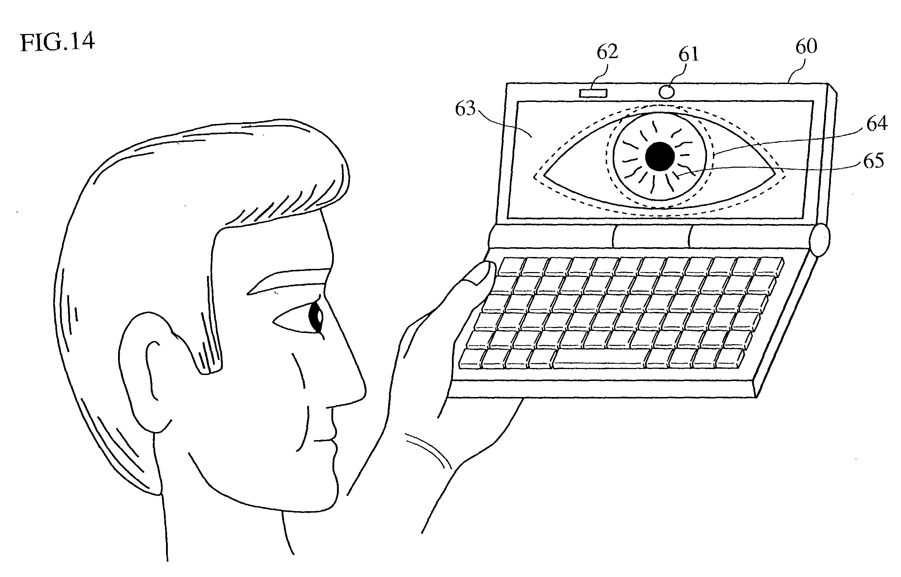

FIG. 14 shows an operator presenting the iris of his right eye for identity verification by a PDA 60. The PDA 60 has a lens window 61 and an illumination window 62 for scanning biometric images installed above an LCD 63.

In similar fashion to the portable telephone 50 shown in FIG. 13, the operator moves his eye and the PDA 60 to match the outline of the iris image 65 to the fixed guide image 64. By holding the PDA 60 and eye in the proper position for a given period of time (e.g., 1 second), or by pressing a specified key, the verification device 200 is instructed to capture the iris image.

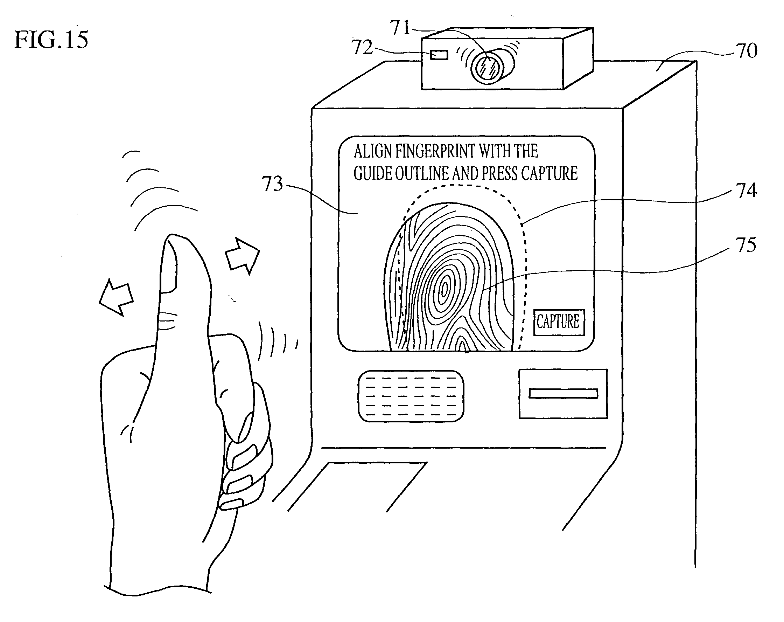

FIG. 15 shows an operator presenting his thumb for identity verification by an ATM 70. The ATM 70 has a lens window 71 and an illumination window 72 for scanning biometric images installed above a CRT 73.

In contrast to the portable telephone 50 and PDA 60, the verification device 200 in the ATM 70 is capable of object-following control by the camera unit 240. Therefore, the operator must only hold his thumb still within a certain area. By watching the movement of the lens window 71 and the convergence of the guide image 74 and fingerprint image 75 on the CRT 73, the operator can discern the process of scanning with automatic viewfinding.

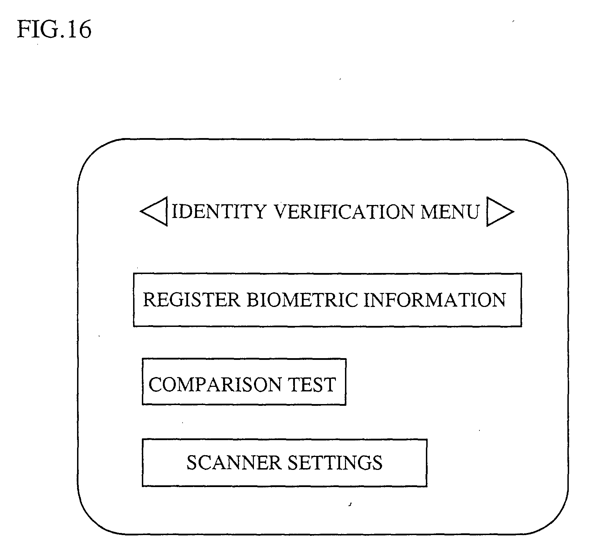

FIG. 16 shows the CRT of a PC 80 (image display unit 270 of a verification device 200) with a sample display, a menu corresponding to the utility functions of the verification device 200.

By selecting "Register" from the menu, the operator can store his own current fingerprint or iris characteristic data to the verification server 30 or ID card 110 as reference data. However, if reference characteristic data is already stored, then identification using that data must be completed before new data can be registered.

By selecting "Comparison Test" from the menu, the operator can test the already registered reference characteristic data (verification device 200 calculates and displays the current agreement values C1 and C2 and overall evaluation values). This allows the operator to confirm the current accuracy of the verification device 200 and decide whether the current reference characteristic data should be updated.

In addition, by selecting "Scanner Settings" from the menu, the operator can adjust the settings for iris scanning (strobe or normal scan), following control (on/off), biometric image obtaining mode (normal or high-accuracy), the number of scan repetitions (n), or the combination of body parts used for identity verification.

The processes in the utility menu are executed by the control unit 260 of the verification device 200, in dialog with the operator via the input unit 280 and image display unit 270. The selected parameters are stored in the nonvolatile memory inside the memory unit 290, control unit 260 or other location, and used at execution of programs such as the image obtaining program 292a.

The preceding is a description of the current invention as it relates to an identity verification device and an electronic money system, the preferred embodiment, but it should be obvious that the present invention is not limited to the details given therein. Several modifications are possible, with representative examples being given below.

For instance, identity verification device in the preferred embodiment is connected to a network 20, and is used by the electronic money system 10 to verify identity while communicating with the verification server 30, the same device could be applied to various other uses as well.

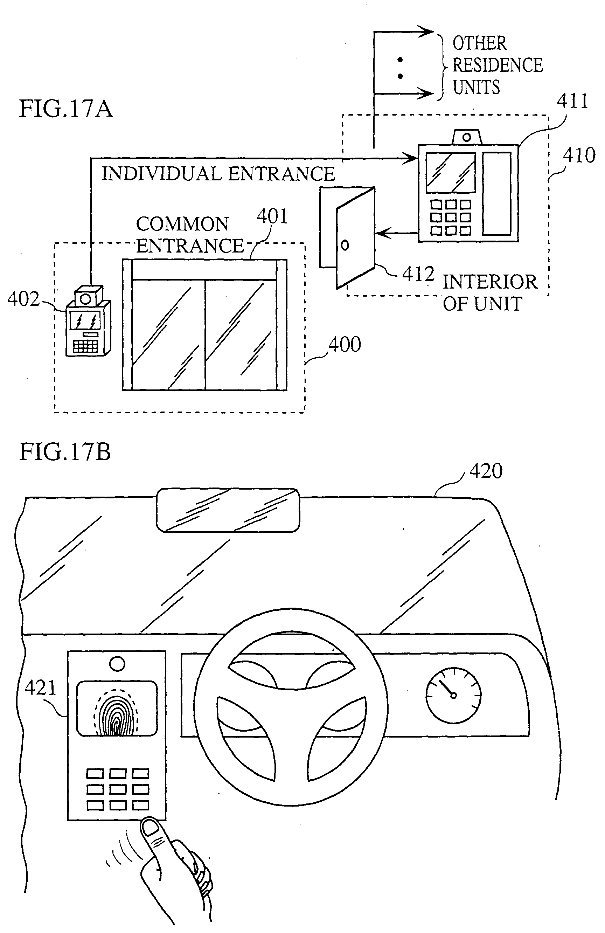

FIG. 17 shows examples of the present invention adapted for use in keyless identity verification applications.

FIG. 17A shows an application of the present invention to a keyless building access control system. Biometric images and characteristic data obtained by the verification device 402 installed at the common entrance 400 is sent to the intercom 411 installed at each individual residence unit 410. The intercom 411, which includes the function of a verification server, attempts to verify identity. If verification is successful, the individual entrance 412 is unlocked. With such a building management system, the residents can register their own biometric information via the intercom 411, and never worry about being locked out, without carrying a key or remembering a password. The system increases the security and convenience of access to each residence in the building.

FIG. 17B shows an application of the present invention to a keyless automobile system. The automobile 420 is equipped with a verification device 421, which stores biometric information from the owner, so that the owner must verify his identity through the verification device 421 before the engine can be started, providing protection from automobile theft.

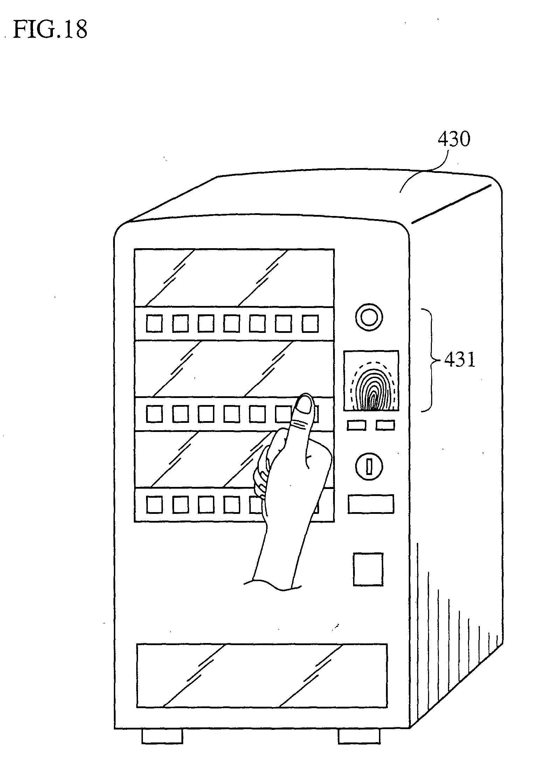

FIG. 18 shows an application of the present invention's identity verification device to an automatic vending machine. The automatic vending machine 430 includes a verification device 431 equivalent in function to the verification device 200 described in the preferred embodiment above, and other devices such as a control circuit, which dispense a product when identity of the user is verified. Users whose biometric information is stored at a verification server (such as people who work in the building where the automatic vending machine 430 is located) can purchase products by electronic transaction, without using cash money, simply by presenting a dedicated card and scanning a body part, or without a card, for the verification device 431.

Further, the present invention's identity verification can be applied to a POS (Point of Sale) system. For example, a verification device 200 and a verification server 30 as described in the preferred embodiment can be installed in a supermarket cash register and server computer, respectively, in a POS system. This arrangement would allow operations similar to the ATM 70 described in the preferred embodiment, such as deposit and withdrawal transactions. Passwords, credit cards and the like would be made superfluous for shopping and other situations, and the level of security in transactions would be raised at the same time.

In the preferred embodiment, the verification device 200 for obtaining biometric images and the verification server 30 containing the characteristic data are described as separate and distinct devices, but the two could be combined to form a single stand-alone identity verification device, which would obtain biometric images and verify identity.

The verification device 200 in the preferred embodiment has a image processing unit 250 which generates characteristic data using a digital filter and the like, but instead the control unit 260 could be equipped with software to generate characteristic data (by having the CPU execute a characteristic extraction program).

In the preferred embodiment fingerprint and iris biometrics were used for identity verification, but the palm of the hand (size, length, thickness, proportion, etc.), the shape of the face (outline, shape or location of the eyes or nose, etc.), blood vessel patterns (on the back of the hand, etc.), or the outer ear (size of the helix, size, width or length of the concha, form length of the auricle, etc.) can also be used.

The user can be allowed to choose from a set of which body part or parts are used for identity verification. For example, for each body part registered in the verification server 30 database, a PDA 60 function key can be assigned and displayed, allowing the user to select which body part to use for identity verification, based on the user's preference, highest security, or other concern.

In the preferred embodiment, response of the pupil was used to detect life in the object body, but movement or blinking of the eye can also be used.

Although the electronic money system 10 described above uses characteristic data drawn from biometric images for comparison and identification, biometric images themselves could be used instead of or in addition to extracted characteristic data. This would allow identity verification based on original images, and allow high-accuracy identity verification based on the comparison algorithms in the verification server 30 or ID card 110.

In the description above, the user aligns a body part with a displayed guide image, and the identity verification device judges whether the position is correct, however the user also can be allowed to judge proper position and initiate the verification process. By displaying only the object image, without a guide, the user is allowed to choose the scanning position, as one chooses the style of one's signature. Scanning position would be an additional unique aspect of the user's identity, in effect providing a higher level of security for the identity verification system. The display of the object image allows the user to check the scanned image, to assure accurate representation of the body part.

Although the present invention has been fully described by way of examples with reference to the accompanying drawings, it is to be noted that various changes and modifications will be apparent to those skilled in the art. Therefore, unless otherwise such changes and modifications depart from the scope of the present invention, they should be construed as being included therein.

## Claims

1. An identity verification apparatus based on biometrics, comprising:
a scanning means for obtaining an object image by scanning a body part of a person without physical contact;
an image display means for displaying the object image to the person;
a verification start command receiving means for receiving a verification start command from the person; and
a verification means for, when the verification start command is received, extracting biometric information describing a form characteristic of the body part from the object image, and verifying identity by comparison with stored reference biometric information.

2. An identity verification apparatus based on biometrics, comprising:
a scanning means for obtaining an object image by scanning a body part of a person without physical contact;
an image display means for displaying the object image;
a guide display means for displaying a guide layered over the object image, the guide showing an outline of the body part in proper position;
a judgement means for judging whether the object image was scanned in the proper position; and
a verification means for extracting biometric information describing a form characteristic of the body part from the object image, if in the proper position, and verifying identity by comparison with stored reference biometric information.

3. The identity verification apparatus in Claim 2, further comprising a scanning control means for controlling scanning direction and magnification of the scanning means.

4. The identity verification apparatus in Claim 2, further comprising:
a motion detection means for controlling the scanning means, in order to repeatedly scan the body part, and detecting movement of the body from a plurality of object images obtained. by repeated scanning,
wherein, when the motion detection means detects movement of the body, and the judgement means judges that the body part is scanned in the proper position, the verification means verifies identity.

5. The identity verification apparatus in Claim 4,
wherein the body part is an iris of an eye, and
the motion detection means illuminates the iris, controls the scanning means in order to scan the iris in phase with the illumination, and detects movement of the body based on the plurality of object images.

6. The identity verification apparatus in Claim 2, further comprising:
a repetition control means for controlling the scanning means in order to repeatedly scan the body part; and
a verification means for extracting biometric information from a plurality of object images obtained by repeated scanning and verifying identity.

7. The identity verification apparatus in Claim 2, further comprising:
a multiple body part control means for controlling the scanning means to obtain an object image of each of a plurality of body parts, causing the image display means to display the object images, causing the guide display means to display the guide images, and causing the judgement means to judge whether the body parts are scanned in the proper position,
wherein the verification means extracts object biometric information pertaining to each body part from a plurality of object images, and verifies identity by comparing the object biometric information with corresponding reference biometric information.

8. The identity verification apparatus in Claim 7 wherein the verification means
assigns a correlation value to represent a level of correlation for each comparison,
calculates a total from a plurality of the correlation values, and
verifies identity based on whether the total is greater than a given threshold value.

9. The identity verification apparatus in Claim 7, wherein the plurality of body parts comprises a fingerprint and an iris.

10. The identity verification apparatus in Claim 7, wherein the plurality of body parts comprises a fingerprint from each of a plurality of fingers.

11. The identity verification apparatus in Claim 7, wherein the plurality of body parts comprises two irides.

12. The identity verification apparatus in Claim 2, further comprising
an ID data obtaining means for obtaining object ID data to verify a person's identity incident to scanning,
wherein the verification means verifies identity by comparing a combination of the extracted biometric information and the object ID data with a combination of the corresponding reference biometric information and reference ID data.

13. The identity verification apparatus in Claim 12 wherein the verification means
specifies one from among a plurality of combinations of reference biometric information and reference ID data, which corresponds with the object ID data, and
verifies identity. by comparing the specified reference biometric information with the extracted biometric information.

14. The identity verification apparatus in Claim 2, further comprising:
a storage means for storing reference biometric information; and
a reference information updating means for replacing reference biometric information stored by the storage means with biometric information extracted by the verification means.

15. The identity verification apparatus in Claim 14, wherein the reference information updating means replaces reference biometric information which has not been updated for a given period of time with biometric information extracted by the verification means.

16. An identity verification system based on biometrics, comprising a verification server and a verification terminal connected via a network, wherein
(1) the verification terminal includes:
a scanning means for obtaining an object image by scanning a body part of a person without physical contact;
an image display means for displaying the object image;
a guide display means for displaying a guide layered over the object image, the guide showing an outline of the body part in proper position;
a judgement means for judging whether the body part is scanned in the proper position; and
a biometric information extraction means for extracting biometric information describing a form characteristic of the body part from the object image, if in the proper position, and transmitting the information to the verification server; and
(2) the verification server includes:
a biometric information storage means for storing a plurality of reference biometric information, and
a verification means for verifying identity by comparing the biometric information transmitted from the verification terminal with the reference biometric information stored in the biometric information storage means.

17. The identity verification system in Claim 16, wherein the verification terminal further comprises:
an ID data obtaining means for obtaining object ID data to verify the person's identity incident to scanning,
a downloading means for downloading from the verification server the reference biometric information which corresponds to the object ID data; and
a verification means for verifying identity by comparing the extracted biometric information with the downloaded reference biometric information; and
the verification server further comprises:
an ID data storage means for storing reference ID data corresponding to each of the plurality of sets of reference biometric information stored in the biometric information storage means;
a biometric information transmitting means for receiving object ID data from the verification terminal, referring to the ID data storage means for the corresponding reference ID data, referring to the biometric information storage means to obtain a corresponding set of reference biometric information, and transmitting the corresponding set of reference biometric information to the verification terminal.

18. A portable card used for identity verification based on biometrics, comprising:
a biometric information storage means for storing reference biometric information describing a form characteristic of a body part;
an image data obtaining means for obtaining image data from outside describing a body part;
a verification means for extracting biometric information describing a form characteristic of the body part from the object image, and verifying identity by comparison with stored reference biometric information.

19. A portable telephone, comprising the identity verification apparatus in Claim 2.

20. A personal computer, comprising the identity verification apparatus in Claim 2.

21. A building management system, which controls entry and exit of persons to a building, comprising:
the identity verification apparatus in Claim 2; and
a control means for unlocking an entry and exit door to the building when identity is verified by the identity verification apparatus.

22. A motorized vehicle, comprising:
the identity verification apparatus in Claim 2; and
a control means for allowing engine starting when identity is verified by the identity verification apparatus.

23. An automatic vending machine, comprising:
the identity verification apparatus in Claim 2; and
a control means for dispensing a specified product when identity is verified by the identity verification apparatus.

24. An automated teller machine, comprising:
the identity verification apparatus in Claim 2; and
a deposit/withdrawal processing means for processing a deposit or withdrawal transaction when identity is verified by the identity verification apparatus.

25. A point-of-sale terminal apparatus, comprising:
the identity verification apparatus in Claim 2; and
a deposit/withdrawal processing means for processing a deposit or withdrawal transaction when identity is verified by the identity verification apparatus.

26. An electronic transaction system based on identity verification by biometrics, comprising a verification terminal and a verification server connected via a network, wherein
(1) the verification terminal includes:
a receiving means for receiving a request from an operator to make an electronic transaction;
a scanning means for obtaining an object image by scanning a body part of the operator without direct contact;
an image display means for displaying the object image;
a guide display means for displaying a guide image, showing an outline of the body part in proper position, layered over the object image;
a judgement means for judging whether the body part is scanned in the proper position, based on the object image; and
a biometric information extracting means for extracting biometric information describing a form characteristic of the body part from the object image, if it is in the proper position, and transmitting the biometric information, along with information describing the electronic transaction, to the verification server; and
(2) the verification server includes:
a biometric information storage means for storing a plurality of reference biometric information;
a verification means for verifying identity by comparing the transmitted biometric information with the reference biometric information; and
a transaction means for, when identity is verified, making the electronic transaction.

27. A method of identity verification based on biometrics, comprising:
a scanning step, in which an object image is obtained by a scanning means which scans a body part, without physical contact;
an image display step, in which the object image is displayed by a display means;
a guide display step, in which the display means displays a guide image showing an outline of the body part in proper position, layered over the object image;
a judgement step, in which the position of the scanned body part is judged to be proper or not, based on the object image; and
a verification step, in which biometric information showing a form characteristic of the body part is extracted from the object image, if the position is proper, and identity is verified by comparison of the extracted biometric information with reference biometric information.

28. A computer-readable recording medium, which stores a program for verifying identity based on biometrics, the program comprising instructions for a computer to execute the identity verification method in Claim 27.
